# EUROPÄISCHE PATENTSCHRIFT

(11) **EP 1 420 496 B1**
(45) Veröffentlichungstag und Bekanntmachung des Hinweises auf die Patenterteilung: **07.10.2009**
(21) Anmeldenummer: 02405984.2
(22) Anmeldetag: 15.11.2002
(51) Int. Cl.: H02H 1/00

(54) **Schutzgerät und Verfahren zur Installation einer Schutzfunktion in einem Schutzgerät**
Protection device and method for installing a protection function in a such device
Dispositif de protection et procédé pour installer une fonction de protection dans un tel dispositif

(43) Veröffentlichungstag der Anmeldung: 19.05.2004
(73) Patentinhaber: ABB Research Ltd., 8050 Zürich (CH)
(72) Erfinder: Deck, Bernhard, 79809 Weilheim (DE); Zurfluh, Franz, 5200 Brugg (CH); Stanimirov, Michael, 4632 Trimbach (CH)
(74) Vertreter: ABB Patent Attorneys

(56) Entgegenhaltungen:
- EP-A- 1 189 324
- WO-A-00/48281
- DE-A- 19 722 898

## Beschreibung

### Technisches Gebiet

Die Erfindung bezieht sich auf das Gebiet der Anlagenleittechnik, insbesondere der Anlagenleittechnik für Hoch- Mittel- oder Niederspannungsschaltanlagen. Sie bezieht sich auf ein Schutzgerät gemäss dem Oberbegriff des Patentanspruchs 1 und auf ein Verfahren zur Installation einer Schutzfunktion in einem Schutzgerät eines elektrischen Energieverteilnetzes gemäss dem Oberbegriff des Patentanspruchs 8.

### Stand der Technik

Eine Anlage, insbesondere eine Hoch- oder Mittelspannungsschaltanlage, wird durch ein verteiltes Anlagenleitsystem aus Feldleitgeräten, die über Kommunikationsbusse miteinander verbunden sind, gesteuert. Ein Anlagenleitsystem weist beispielsweise Feldleitgeräte und eine Bedienstation auf, sowie verschiedene Kommunikationsbusse und Buskoppler. Die Leitgeräte steuern, regeln, überwachen und schützen Primärgeräte der Anlage, welche den eigentlichen Anlagenzweck erfüllen. Primärgeräte sind beispielsweise Leistungsschalter, Trenner, Freileitungen, Transformatoren, Generatoren oder Motoren.

Schutzfunktionen überwachen das korrekte Funktionieren der Anlage. Allgemein bekannte Schutzfunktionen für elektrische Netze sind beispielsweise Überstromschutz, Distanzschutz, oder Differentialschutz aufgrund von Stromoder Phasensignalen. Wird ein Fehler wie z.B. ein Kurzschluss detektiert, so wird typischerweise eine Leitung vom Netz getrennt. Fehler aufgrund äusserer Einwirkungen oder eines Versagens eines Anlagenteils müssen mit sehr hoher Zuverlässigkeit detektiert werden. In manchen Anwendungen müssen dabei aber Abschaltungen aufgrund von falsch erkannten Fehlern unbedingt vermieden werden. Um diesen widersprüchlichen Anforderungen zu genügen, sind entsprechende Schutzfunktionen sehr komplex und aufwendig in der Entwicklung. In anderen Anwendungen genügen weniger komplexe Schutzfunktionen.

Schutzgeräte weisen Mittel zur Verarbeitung von Messwerten aus Messgeräten des Energieverteilnetzes, sowie Mittel zum Auslösen von Schaltbefehlen durch Primärgeräte des Energieverteilnetzes auf. Schutzfunktionen sind durch Computerprogramme implementiert, welche im Schutzgerät installiert sind und durch einen programmgesteuerten Mikroprozessor ausgeführt werden und dabei die Schaltbefehle nach Massgabe der Messwerte bestimmen. Die Kosten für ein Schutzgerät richten sich nach den Kosten für die installierte Schutzfunktion, nach der Komplexität der Hardware und nach dem Aufwand zur Konfiguration für eine bestimmte Schutzanwendung. Schutzgeräte werden auf eine bestimmte Funktion ausgelegt und optimiert und sind nicht flexibel verwendbar. Ein solches Schutzgerät ist zu dem Dokument, WO 0 048 281 beschrieben.

### Darstellung der Erfindung

Es ist deshalb Aufgabe der Erfindung, ein Schutzgerät, eine Unterstation und ein Verfahren zur Installation einer programmierbaren Schutzfunktion in einem Schutzgerät eines elektrischen Energieverteilnetzes der eingangs genannten Art zu schaffen, welche eine flexible Verwendung des Schutzgerätes ermöglicht.

Diese Aufgabe lösen ein Schutzgerät, eine Unterstation und ein Verfahren zur Installation einer Schutzfunktion in einem Schutzgerät eines elektrischen Energieverteilnetzes mit den Merkmalen der unabhängigen Ansprüche.

Das erfindungsgemässe Schutzgerät eines elektrischen Energieverteilnetzes, weist also eine programmierbare Logik zur Ausführung einer Schutzfunktion auf.

Dies erlaubt einen flexiblen Einsatz des Gerätes bei gleichzeitig hoher Leistungsfähigkeit, wie sie für Schutzgeräte benötigt wird. Für zeitkritische Schutzanwendungen wird nicht mehr zwingend ein echtzeitfähiges Mikroprozessor-Betriebssystem benötigt.

In einer bevorzugten Ausführungsform der Erfindung weist das Schutzgerät Mittel zur Programmierung der programmierbaren Logik zur Ausführung einer zweiten Schutzfunktion anstelle der ersten auf.

Im Verlauf der Lebensdauer einer Schaltanlage und der dazugehörigen Schutzgeräte können sich die Anforderungen an den Schutz ändern. Beispielsweise wird die übertragene Leistung erhöht, oder die Sicherheitsanforderungen des Netzbetreibers ändern sich. Gemäss dieser Ausführungsform der Erfindung ist es möglich, die programmierbare Logik auch nach Installation des Schutzgerätes in die Schaltanlage anhand einer Beschreibung der zweiten Schutzfunktion umzuprogrammieren und das Gerät somit flexibel und entsprechend wechselnden Bedürfnissen eines Anlagenbetreibers einzusetzen.

In einer weiteren bevorzugten Ausführungsform der Erfindung weist das Schutzgerät Mittel zum Empfang einer Beschreibung einer Schutzfunktion über eine Kommunikationsverbindung von einem entfernten Funktionsserver und Mittel zum Laden der Beschreibung in die programmierbare Logik auf. Angepasste Schutzfunktionen können also gemäss der Erfindung ferngesteuert installiert werden, was eine Vereinfachung gegenüber der Installation vor Ort durch einen Servicetechniker bedeutet.

Weitere bevorzugte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen:
- Figur 1: eine schematische Darstellung einer Schaltanlage und eines zugeordneten Leitsystems; und
- Figur 2: schematisch ein erfindungsgemässes Schutzgerät und seine Umgebung.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### Wege zur Ausführung der Erfindung

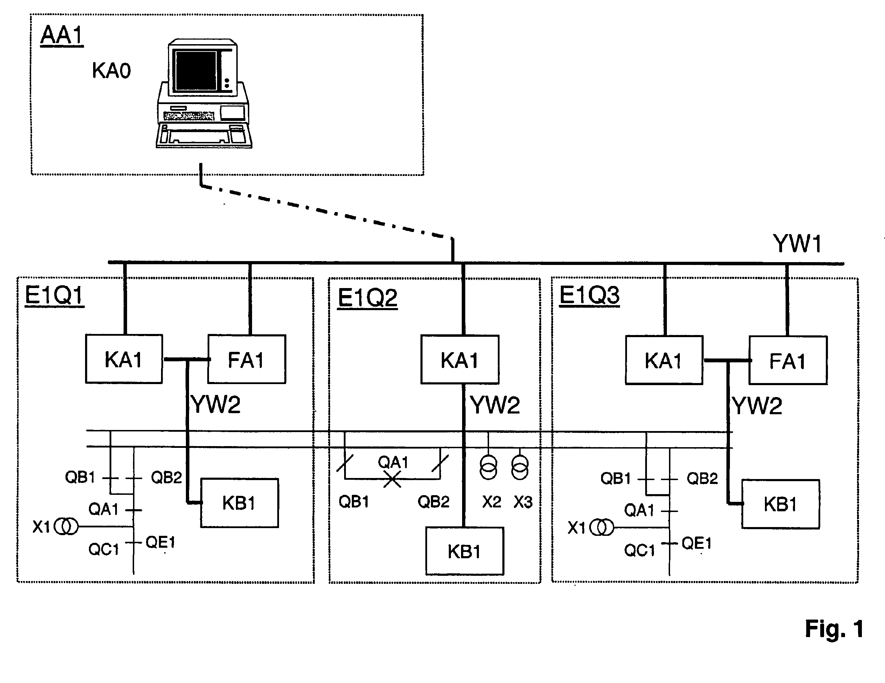

Figur 1 zeigt eine schematische Darstellung einer Schaltanlage oder Unterstation eines elektrischen Energieverteilnetzes und eines zugeordneten Leitsystems. Die Darstellung zeigt drei Felder E1Q1, E1 Q2 und E1 Q3 einer Schaltanlage und eine Bedienstation AA1 mit einem Datenverarbeitungsgerät KA0 mit üblichen Ein- und Ausgabemitteln zur Bedienung durch einen Benutzer. Die Bedienstation AA1 ist in der Unterstation selber angeordnet oder entfernt in einer Bedienzentrale eines Netzbetreibers angeordnet und über ein Kommunikationsnetzwerk mit einem übergeordneten Bus YW1 der Unterstation verbunden. Die einzelnen Felder E1Q1, E1 Q2 und E1Q3 weisen jeweils Leitgeräte auf, welche Steuergeräte KA1, Schutzgeräte FA1 oder Ein/Ausgabegeräte KB1 sind.

Die Bezeichnungen KA1, FA1, KB1, YW1, etc. bezeichnen reale Geräte und Leitsystemfunktionen einer Anlage. Um ein bestimmtes Gerät eindeutig zu bezeichnen, wird ihm die Bezeichnung des Feldes vorangestellt. So bezeichnet beispielsweise E1Q1QA1 einen Schalter QA1 des Feldes E1Q1.

Auf den Leitgeräten sind Leitsystemfunktionen zur Steuerung und Überwachung der Primärgeräte installiert. Die Leitgeräte sind durch Kommunikationsmittel, im Beispiel durch den übergeordneten Bus YW1 und durch Prozessbusse YW2 miteinander verbunden. Den Leitsystemfunktionen sind Primärgeräte wie beispielsweise Schalter QA1, Trenner QB1,QB2 und Spannungsgeber respektive Spannungsmessgeräte X1, X2, X3 zugeordnet. Die Primärgeräte sind durch leistungsführende elektrische Verbindungen miteinander verbunden, also z.B. über Sammelschienen, Feldknoten und Leitungsabgänge.

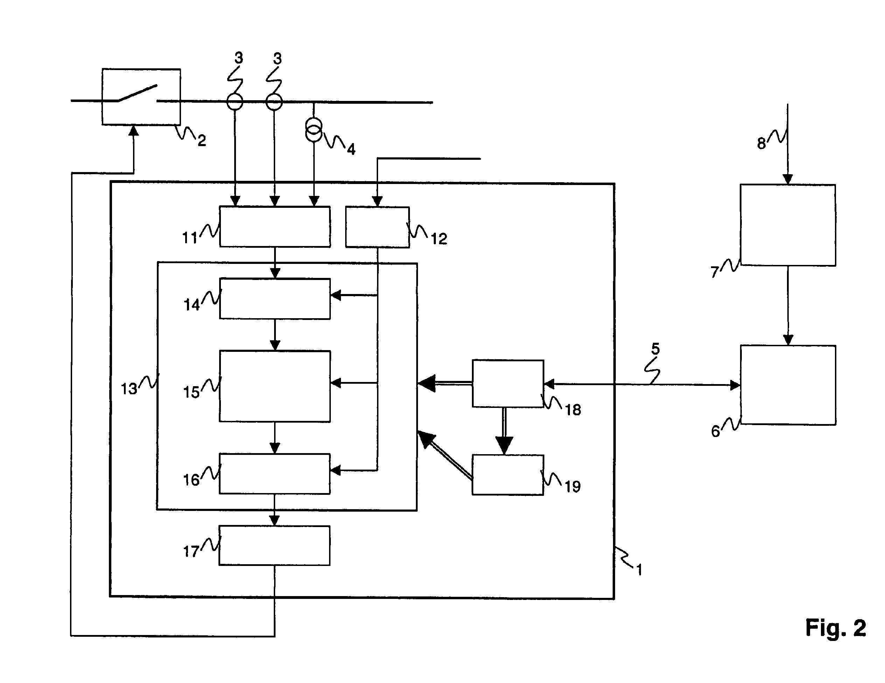

Figur 2 zeigt schematisch ein erfindungsgemässes Schutzgerät 1 einer Unterstation und seine Umgebung. Eine Signalkonditionierung 11 erfasst Messsignale von Strommessgeräten 3 und Spannungsmessgeräten 4 des Energieverteilnetzes, insbesondere einer Schaltanlage. Die Signalkonditionierung 11 führt eine Konditionierung und eine Analog-Digital-Wandlung der Messsignale durch und übermittelt entsprechende digital codierte Messwerte an eine programmierbare Logik 13. Die programmierbare Logik 13 weist eine Messwertverarbeitung 14 zur Filterung von Messwerten und zur Berechnung von beispielsweise Leistung aus Spannung und Strom auf. Derart gefilterte und berechnete Messwerte werden einem Schutzfunktionskern 15 zugeführt, welcher einen mehr oder weniger komplexen Kern der Schutzfunktion implementiert. Digitaleingänge 12 zur Auswahl von Schutzfunktionen, Steuerung der Messwertvorverarbeitung oder zur Unterdrückung von Schaltbefehlen werden der programmierbaren Logik 13 ebenfalls zugeführt. Im Betrieb des Schutzgerätes 1 ermittelt der Schutzfunktionskern 15, ob ein Störfall vorliegt und ein Schaltbefehl an ein zugeordnetes Primärgerät, in diesem Beispiel ein Schalter 2, ergehen sollte. Ein solcher Schaltbefehl wird einer Schutzlogik 16 übermittelt, welche ihn optional mit anderen digitalen Signalen verknüpft, insbesondere mit Sperrsignalen, welche eine Weiterleitung des Schaltbefehls unterbinden können. Ein entsprechendes Ausgangssignal der Schutzlogik 16 wird in einem Digitalausgang 17 gewandelt und dem Schalter 2 zugeführt. Dies geschieht beispielsweise durch speziell zugeordnete Leitungen wie Lichtwellenleiter, oder über einen Prozessbus YW2.

In einer bevorzugten Ausführungsform der Erfindung weist das Schutzgerät 1 eine Kommunikationsschnittstelle 18 auf, welche zur Kommunikation mit einem Funktionsserver 6 über eine Kommunikationsverbindung 5 dient. Die Kommunikationsverbindung 5 ist beispielsweise eine temporäre Punkt-Punkt Verbindung oder eine Verbindung gemäss einem Internet-Protokoll wie http oder mit FTP, oder TelNet. Die Verbindungen basieren vorzugsweise auf dem bekannten TCP/IP Internet-Protokoll.

Der Funktionsserver 6 speichert mehrere unterschiedliche Schutzfunktionen, respektive deren Beschreibung. Diese Beschreibung ist nach Massgabe eines Lizenzstatus über die Kommunikationsverbindung 5 an das Schutzgerät 1 übermittelbar und im programmierbaren Modul 13 ladbar und ausführbar. Der Lizenzstatus wird in einer bevorzugten Ausführungsform der Erfindung durch ein Lizenzverwaltungsmittel 7 ermittelt, verwaltet, und bei Bedarf dem Funktionsserver 6 übermittelt. Der Lizenzstatus beinhaltet für jedes betroffene Schutzgerät 1 die Information, welche Schutzfunktion in welchem Zeitraum, also zwischen vorgegebenen Anfangs- und Endzeitpunkten, genutzt werden darf respektive ausführbar sein soll.

Das Lizenzverwaltungsmittel 7 ist ein Computerprogramm zur Ermittlung und Verwaltung des Lizenzstatus: Es bietet vorzugsweise eine Benutzerschnittstelle 8 zur Modifikation des Lizenzstatus. In einer bevorzugten Ausführungsform der Erfindung ist die Benutzerschnittstelle 8 über ein Kommunikationsnetzwerk wie beispielsweise dem Internet oder World Wide Web einem Netzbetreiber zugänglich. Dabei wird die Auswahl einer bestimmten Schutzfunktion mit einer Zahlung einer Lizenzgebühr verknüpft: der Lizenzstatus der Schutzfunktion erlaubt nur dann eine Nutzung der Schutzfunktion, d.h. eine Übermittlung der Beschreibung der Schutzfunktion an das Schutzgerät 1 und/oder ein Laden der Beschreibung in das programmierbare Modul 13, falls das Lizenzverwaltungsmittel 7 eine Bestätigung einer Zahlung der Lizenzgebühr erhält.

Der Funktionsserver 6 und das Lizenzverwaltungsmittel 7 sind jeweils als Computerprogramme auf unterschiedlichen oder auf derselben Datenverarbeitungseinheit(en) und mit zugeordneten Datenspeichern implementiert. Sie befinden sich vorzugsweise unter Kontrolle und in Räumlichkeiten eines Herstellers des Schutzgerätes 1 und werden durch diesen mit neuen Schutzfunktionen versehen.

Erfindungsgemäss weist die programmierbare Logik 13 einen programmierbaren, typischerweise zumindest teilweise ungetaktet arbeitenden digitalen Logikbaustein auf. Dieser ist beispielsweise ein FPGA (Field Programmable Gate Array) ein PLA (programmierbares logisches Feld) oder ein CPLD (Complex Programmable Logic Device). Ausführungsformen von FPGA's sind bekannt als "symmetrical array", "row-based", "hierarchical PLD", und "sea-of-gates". Bekannte Technologien sind statische RAM Zellen, "anti-fuse", EPROM Transistoren, und EEPROM Transistoren. Weitere Ausführungsformen von Bausteinen mit programmierbarer Logik weisen zusätzlich einen Mikroprozessor und/oder Mittel zum Umprogrammieren des Logikteils auf.

Die einzelnen Blöcke Messwertverarbeitung 14, Schutzfunktionskern 15 und Schutzlogik 16 der Schutzfunktion sind jeweils in einer Standard-Hardwarebeschreibungssprache wie VHDL (VHSIC Hardware Description Language), Verilog oder System-C beschrieben. In einer anderen bevorzugten Ausführungsform der Erfindung sind die einzelnen Blöcke der Schutzfunktion durch einen Bitstrom beschrieben. Der Bitstrom wird in bekannter Weise in die programmierbare Logik 13, resp. den FPGA oder CPLD geladen, um die programmierbare Logik 13 zur Ausführung eines bestimmten Hardwaredesigns entsprechend der gewünschten Funktion zu bringen. Die Beschreibung der Schutzfunktion, welche dem Schutzgerät 1 durch den Funktionsserver 6 übermittelt wird, ist also eine Beschreibung eines Hardware-Designs, welche je nach Ausführungsform der Erfindung die Form eines Bitstroms oder die Form einer Hardwarebeschreibungssprache annimmt. Die Übermittlung der Beschreibung vom Funktionsserver 6 an das Schutzgerät 1 geschieht vorzugsweise verschlüsselt.

In einer bevorzugten Ausführungsform der Erfindung sind die Messwertverarbeitung 14 und Schutzlogik 16 zusammen mit dem Schutzfunktionskern 15 in der programmierbaren Logik 13 implementiert. In einer anderen bevorzugten Ausführungsform der Erfindung ist die Messwertverarbeitung 14 und/oder die Schutzlogik 16 nicht in der programmierbaren Logik 13 implementiert, sondern in separaten Bausteinen.

Verschiedene Varianten von Implementationen der einzelnen Blöcke Messwertverarbeitung 14, Schutzfunktionskern 15 und Schutzlogik 16 werden vorzugsweise in Funktionsbibliotheken des Funktionsservers 6 gespeichert und sind für einen bestimmten Anwendungsfall konfigurierbar und kombinierbar.

In einer weiteren bevorzugten Ausführungsform der Erfindung sind die Signalkonditionierung 11 und/oder der Digitalausgang 17 nicht Teil des Schutzgerätes 1 , sondern in separaten Geräten implementiert. Diese separaten Geräte übermitteln die digital codierte Messwerte an die Messwertverarbeitung 14 respektive erhalten die Ausgangssignale der Schutzlogik 16 beispielsweise über einen Prozessbus YW2

In einer bevorzugten Ausführungsform der Erfindung weist das Schutzgerät 1 einen Funktionsspeicher 19 auf, in welchem eine oder mehrere Beschreibungen von Schutzfunktionen speicherbar sind. Dies erlaubt, eine geladene Schutzfunktion durch das Laden einer im Funktionsspeicher 19 gespeicherten anderen Schutzfunktion auszutauschen, ohne dass die Schutzfunktionen über die Kommunikationsverbindung 5 übermittelt werden müssen. Ein Befehl zum Austausch der Schutzfunktionen ist dabei entweder lokal am Schutzgerät oder ferngesteuert über die Bedienstation KA0 oder über die Kommunikationsverbindung 5 auslösbar. Ein solcher Befehl ist aber auch beispielsweise timergesteuert auslösbar: Dadurch kann eine Schutzfunktion über die Kommunikationsverbindung 5 übermittelt, im Funktionsspeicher 19 gespeichert und erst zu einem vorbestimmten Zeitpunkt in die programmierbare Logik 13 geladen werden. In einer weiteren bevorzugten Ausführungsform der Erfindung ist im Funktionsspeicher 19 eine Basis-Schutzfunktion gespeichert, welche einen vorgegebenen minimalen Schutz implementiert. Falls eine Lizenz für eine geladene Schutzfunktion nach Massgabe des Lizenzstatus abgelaufen ist, wird automatisch die Basis-Schutzfunktion geladen.

### Bezugszeichenliste

- 1: Schutzgerät
- 2: Primärgerät, Schalter
- 3: Strommessgerät
- 4: Spannungsmessgerät
- 5: Kommunikationsverbindung
- 6: Funktionsserver
- 7: Lizenzverwaltungsmittel
- 8: Benutzerschnittstelle
- 1 1: Analogeingang, Signalkonditionierung
- 12: Digitaleingang
- 13: programmierbare Logik
- 14: Messwertverarbeitung
- 15: Schutzfunktionskern
- 16: Schutzlogik
- 17: Digitalausgang
- 18: Kommunikationsschnittstelle
- 19: Funktionsspeicher
- QA1: Schalter
- QB1: Trenner
- X1, X2, X3: Spannungsgeber
- YW1: übergeordneter Bus
- YW2: Prozessbus
- KA1: Steuergerät
- FA1: Schutzgerät
- KB1: Ein-/Ausgabegerät

## Patentansprüche

1. Schutzgerät (1) eines elektrischen Energieverteilnetzes, wobei das Schutzgerät (1) eine programmierbare Logik (13) aufweist, welche zur Ausführung einer ersten Schutzfunktion programmiert ist, die Logik (13) Mittel zur Verarbeitung von Messwerten (14) aus Messgeräten (3,4) des Energieverteilnetzes, und Mittel zum Auslösen von Schaltbefehlen (16) durch Primärgeräte (2) des Energieverteilnetzes aufweist, wobei die programmierbare Schutzfunktion, wenn sie ausgeführt wird, die Schaltbefehle nach Massgabe der Messwerte bestimmt,
**dadurch gekennzeichnet, dass** das Schutzgerät Mittel zur Programmierung der programmierbaren Logik (13) zur Ausführung einer zweiten Schutzfunktion aufweist.

2. Schutzgerät (1) gemäss Anspruch 1, welches Mittel zum Empfang (18) einer Beschreibung einer Schutzfunktion über eine Kommunikationsverbindung (5) und Mittel zum Laden der Beschreibung in die programmierbare Logik (13) aufweist.

3. Schutzgerät (1) gemäss Anspruch 2, wobei das Mittel zum Empfang (18) eine Schnittstelle zur einem Kommunikationsnetzwerk gemäss dem TCP/IP-Protokoll aufweist.

4. Schutzgerät (1) gemäss einem der vorhergehenden Ansprüche, wobei die programmierbare Logik 13 ein FPGA (Field Programmable Gate Array) oder ein CPLD (Complex Programmable Logic Device) ist.

5. Schutzgerät (1) gemäss Anspruch 4, wobei die Beschreibung der ersten und der zweiten Schutzfunktion eine VHDL (VHSIC Hardware Description Language) Beschreibung oder eine Bitstrom-Beschreibung eines Hardware-Designs zur Ausführung der ersten beziehungsweise der zweiten Schutzfunktion auf der programmierbaren Logik (13) ist.

6. Unterstation eines elektrischen Energieverteilnetzes mit einem Schutzgerät (1) gemäss einem der Ansprüche 1 bis 5.

7. verfahren zur Installation einer zweiten Schutzfunktion in einem Schutzgerät (1) eines elektrischen Energieverteilnetzes, wobei das Schutzgerät (1) eine programmierbare Logik (13) aufweist, welche zur Ausführung einer ersten Schutzfunktion programmiert ist, die Logik (13) Mittel zur Verarbeitung (14) von Messwerten aus Messgeräten (3,4) des Energieverteilnetzes und Mittel zum Auslösen (16) von Schaltbefehlen durch Primärgeräte (2) des Energieverteilnetzes aufweist, wobei die erste Schutzfunktion, wenn sie ausgeführt wird, die Schaltbefehle nach Massgabe der Messwerte bestimmt,
**dadurch gekennzeichnet, dass** das Verfahren die folgenden Schritte aufweist
• Übermittlung einer Beschreibung der zweiten Schutzfunktion in Form einer Beschreibung eines Hardware-Designs über eine Kommunikationsverbindung (5) an das Schutzgerät (1),
• Programmierung der programmierbaren Logik (13) im Schutzgerät (1) gemäss der Beschreibung der zweiten Schutzfunktion, und
• Ausführen der zweiten Schutzfunktion durch die programmierbare Logik (13).

8. Verfahren gemäss Anspruch 7, wobei die Beschreibung der zweiten Schutzfunktion eine VHDL (VHSIC Hardware Description Language) Beschreibung oder eine Bitstrom-Beschreibung des Hardware-Designs zur Ausführung der zweiten Schutzfunktion auf der programmierbaren Logik (13) ist.

9. Verfahren gemäss Anspruch 7 oder 8, wobei die Übermittlung einer Beschreibung der zweiten Schutzfunktion über ein Kommunikationsnetzwerk gemäss dem TCP/IP-Protokoll geschieht.

## Claims

1. Protective device (1) for an electrical power distribution network, with the protective device (1) having programmable logic (13) which is programmed in order to carry out a first protective function, the logic (13) having means for processing of measured values (14) from measurement appliances (3, 4) for the power distribution network, and means for initiating switching commands (16) by primary appliances (2) for the power distribution network, with the programmable protective function, when it is carried out, determining the switching commands on the basis of the measured values,
**characterized in that** the protective device has means for programming the programmable logic (13) in order to carry out a second protective function.

2. Protective device (1) according to Claim 1, which has means for receiving (18) a description of a protective function via a communication link (5) and means for loading the description in the programmable logic (13).

3. Protective device (1) according to Claim 2, with the means for receiving (18) having an interface to a communication network based on the TCP/IP protocol.

4. Protective device (1) according to one of the preceding claims, with the programmable logic 13 being an FPGA (Field Programmable Gate Array) or a CPLD (Complex Programmable Logic Device).

5. Protective device (1) according to Claim 4, wherein the description of the first and the second protective function is a VHDL (VHSIC Hardware Description Language) description or a bit-stream description of a hardware design for carrying out the first or the second protective function on the programmable logic (13).

6. Substation for an electrical power distribution network having a protective device (1) according to one of Claims 1 to 5.

7. Method for installation of a second protective function in a protective device (1) for an electrical power distribution network, wherein the protective device (1) has programmable logic (13) which is programmed in order to carry out a first protective function, the logic (13) has means for processing (14) measured values from measurement appliances (3, 4) for the power distribution network, and means for initiating (16) switching commands by primary appliances (2) for the power distribution network, wherein the first protective function, when it is carried out, determines the switching commands on the basis of the measured values,
**characterized in that** the method has the following steps:
• transmission of a description of the second protective function in the form of a description of a hardware design via a communication link (5) to the protective device (1),
• programming of the programmable logic (13) in the protective device (1) on the basis of the description of the second protective function, and
• carrying out the second protective function by means of the programmable logic (13).

8. Method according to Claim 7, wherein the description of the second protective function is a VHDL (VHSIC Hardware Description Language) description or a bit-stream description of the hardware design for carrying out the second protective function on the programmable logic (13).

9. Method according to Claim 7 or 8, wherein a description of the second protective function is transmitted via a communication network using the TCP/IP protocol.

## Revendications

1. Appareil de protection (1) d'un réseau de distribution d'énergie électrique, l'appareil de protection (1) présentant une logique programmable (13) qui est programmée pour exécuter une première fonction de protection, la logique (13) présentant des moyens pour traiter des valeurs mesurées (14) provenant d'appareils de mesure (3, 4) du réseau de distribution d'énergie et des moyens pour déclencher des instructions de commutation (16) par des appareils primaires (2) du réseau de distribution d'énergie, la fonction de protection programmable, lorsqu'elle est exécutée, déterminant les instructions de commutation en fonction des valeurs mesurées, **caractérisé en ce que** l'appareil de protection présente des moyens pour programmer la logique programmable (13) en vue d'exécuter une deuxième fonction de protection.

2. Appareil de protection (1) selon la revendication 1, lequel présente des moyens pour recevoir (18) une description d'une fonction de protection par le biais d'une liaison de communication (5) et des moyens pour charger la description dans la logique programmable (13).

3. Appareil de protection (1) selon la revendication 2, les moyens de réception (18) présentant une interface avec un réseau de communication conforme au protocole TCP/IP.

4. Appareil de protection (1) selon l'une des revendications précédentes, la logique programmable (13) étant un FPGA (réseau logique programmable sur site) ou un CPLD (composant logique programmable complexe).

5. Appareil de protection (1) selon la revendication 4, la description de la première et de la deuxième fonction de protection étant une description en VHDL (langage de description matériel de VHSIC) ou une description en flux binaire d'une conception physique destinée à exécuter la première ou la deuxième fonction de protection sur la logique programmable (13).

6. Sous-station d'un réseau de distribution d'énergie électrique comprenant un appareil de protection (1) selon l'une des revendications 1 à 5.

7. Procédé d'installation d'une deuxième fonction de protection dans un appareil de protection (1) d'un réseau de distribution d'énergie électrique, l'appareil de protection (1) présentant une logique programmable (13) qui est programmée pour exécuter une première fonction de protection, la logique (13) présentant des moyens pour traiter (14) des valeurs mesurées provenant d'appareils de mesure (3, 4) du réseau de distribution d'énergie et des moyens pour déclencher (16) des instructions de commutation par des appareils primaires (2) du réseau de distribution d'énergie, la première fonction de protection, lorsqu'elle est exécutée, déterminant les instructions de commutation en fonction des valeurs mesurées, **caractérisé en ce que** le procédé comprend les étapes suivantes :
• Communication à l'appareil de protection (1) d'une description de la deuxième fonction de protection sous la forme d'une description d'une conception physique par le biais d'une liaison de communication (5),
• Programmation de la logique programmable (13) dans l'appareil de protection (1) conformément à la description de la deuxième fonction de protection et
• Exécution de la deuxième fonction de protection par la logique programmable (13).

8. Procédé selon la revendication 7, la description de la deuxième fonction de protection étant une description en VHDL (langage de description matériel de VHSIC) ou une description en flux binaire d'une conception physique destinée à exécuter la deuxième fonction de protection sur la logique programmable (13).

9. Procédé selon la revendication 7 ou 8, la communication d'une description de la deuxième fonction de protection s'effectuant par le biais d'un réseau de communication conformément au protocole TCP/IP.
